# EUROPEAN PATENT SPECIFICATION

(11) **EP 4 411 158 B1**
(45) Date of publication and mention of the grant of the patent: **14.01.2026**
(21) Application number: 22872887.9
(22) Date of filing: 20.09.2022
(51) Int. Cl.: F16C 19/36, F16C 33/36, F16C 33/58, F16C 19/38, F16C 23/08

(54) **TAPERED ROLLER BEARING**
KEGELROLLENLAGER
ROULEMENT À ROULEAUX CONIQUES

(30) Priority: 27.09.2021 JP 2021157035
(43) Date of publication of application: 07.08.2024
(73) Proprietor: NTN Corporation, Osaka-shi, Osaka 530-0005 (JP)
(72) Inventor: TOHO, Shouta, Kuwana-shi, Mie 511-8678 (JP)
(74) Representative: Maikowski & Ninnemann Patentanwälte Partnerschaft mbB
(86) International application number: PCT/JP2022/034965
(87) International publication number: WO 2023/048135

(56) References cited:
- WO-A1-2016/121420
- WO-A1-2019/065750
- WO-A1-2019/065753
- JP-A- 2002 139 055
- JP-A- 2002 139 055
- JP-A- 2004 324 670
- JP-A- 2021 127 834
- JP-A- S6 131 715
- JP-B2- 3 359 501

## Description

### CROSS REFERENCE TO THE RELATED APPLICATION

This application is based on and claims Convention priority to Japanese patent application No. 2021-157035, filed September 27, 2021.

### BACKGROUND OF THE INVENTION

### (Field of the Invention)

The present invention relates to a tapered roller bearing used, for example, in hydraulic pumps, hydraulic motors, etc., of construction machines and the like.

### (Description of Related Art)

There is a tapered roller bearing in which the ten-point average roughness of the large end surface of each tapered roller is set to 0.3 to 1.2 µm, thereby setting the composite roughness (root mean square height) of the roughness of the large end surface of the tapered roller and the roughness of a collar portion of an inner ring to 0.34 to 1.44 µm (Patent Document 1). Patent Document 2 discloses a further improved tapered roller bearing.

Accordingly, a phenomenon that a preload for each product when obtaining the required rotational torque is excessive or insufficient can be avoided during assembly of a tapered roller bearing to a use target.

### [Related Document]

### [Patent Document]

[Patent Document 1] JP Laid-open Patent Publication No. 2001-107952 [Patent Document 2] WO 2019/065753 Al

### SUMMARY OF THE INVENTION

When the roughness of a large collar surface of the inner ring is good, that is, when the roughness of the large collar surface of the inner ring is small, the large collar surface of the inner ring has low oil retainability, and it becomes difficult for oil to remain on the large collar surface of the inner ring and the large end surface of the tapered roller. In this state, if the tapered roller bearing is repeatedly rotated and stopped suddenly, a sufficient oil film is not formed on the large collar surface of the inner ring and the large end surface of the tapered roller, and these surfaces come into metallic contact with each other, thereby increasing the coefficient of friction between these surfaces.

At this time, due to the sudden stop, the large end surface of the tapered roller is stopped while being dragged on the large collar surface of the inner ring, whereby the tapered roller cannot be maintained in the normal posture and is undesirably inclined (skewed). This phenomenon is particularly likely to occur in a tapered roller bearing having a large outer ring angle, which is the inclination angle of the raceway surface of an outer ring, that is, having a steep slope.

If the tapered roller bearing is restarted with the tapered roller being in an inclined posture, a force to return the inclined tapered roller to the normal posture is required, thereby increasing the starting torque of the tapered roller bearing. Therefore, there is a need for a tapered roller bearing product whose starting torque is less likely to be affected by the roller posture.

An object of the present invention is to provide a tapered roller bearing that can reduce changes in the posture of each tapered roller and stabilize torque at the time of start.

A tapered roller bearing of the present invention includes: an inner ring having a conical raceway surface and provided with a large collar surface on a large-diameter side of the raceway surface; an outer ring having a conical raceway surface; and tapered rollers provided between the raceway surface of the inner ring and the raceway surface of the outer ring, wherein
an outer ring angle which is a cone angle of the raceway surface of the outer ring is 45° (degrees) or larger and 68° or smaller, the large collar surface of the inner ring is a ground surface, and has an arithmetic mean roughness Ra of larger than 0.1 µm and smaller than 0.4 µm and a maximum height (of irregularities) Rz of larger than 1 µm and smaller than 3 µm, and the tapered rollers each have a large end surface having an arithmetic mean roughness Ra of larger than 0.04 µm and smaller than 0.2 µm.

The tapered roller bearing of the present invention is hereinafter sometimes referred to simply as "bearing".

With this configuration, in the tapered roller bearing having an outer ring angle of 45° or larger and 68° or smaller, since the large collar surface of the inner ring is a ground surface, 0.1 µm < arithmetic mean roughness Ra of large collar surface < 0.4 µm, and 1 µm < maximum height Rz of large collar surface < 3 µm, changes in the posture of each tapered roller can be reduced, so that the torque at the time of bearing start can be stabilized. If the arithmetic mean roughness Ra of the large collar surface is 0.1 µm or smaller, the posture of the tapered roller is changed when the bearing is stopped suddenly, so that the restarting torque after the bearing is stopped is increased. If the arithmetic mean roughness Ra of the large collar surface is 0.4 µm or larger, there is a concern that the torque during bearing operation increases and the friction and the wear of the bearing increase, resulting in an excessive temperature rise. In addition, since the large collar surface of the inner ring is a ground surface, the large collar surface contributes to improving oil retainability for a lubricant.

Since the roughness of the large end surface of the tapered roller as well as the large collar surface of the inner ring affects the torque at restart, the friction, the wear, and the temperature rise, the arithmetic mean roughness (roller large end surface roughness) Ra of the large end surface of each tapered roller is set to be larger than 0.04 µm and smaller than 0.2 µm. If the roller large end surface roughness is 0.04 µm or smaller, posture change after the bearing is stopped suddenly is promoted, so that the starting torque is increased. If the roller large end surface roughness is 0.2 µm or larger, there is a concern that the torque during bearing operation increases and the friction and the wear of the bearing increase, resulting in an excessive temperature rise.

The large collar surface of the inner ring may have a skewness Rsk of -2 µm or larger and 0 µm or smaller.

The skewness Rsk is the skewness Rsk of a roughness curve specified in 4.2.3 of the Japanese Industrial Standard (JIS) B0601: 2013.

In this case, a sufficient oil film is formed on the large collar surface of the inner ring and each roller large end surface, and the torque during bearing operation can be reduced. If the skewness Rsk of the large collar surface is smaller than -2 µm, the oil retainability of the large collar surface of the inner ring is low, and it is difficult for oil to remain on the large collar surface of the inner ring and each roller large end surface. If the skewness Rsk of the large collar surface is larger than 0, the torque during bearing operation increases.

The raceway surface of the outer ring may have a single arc crowning shape or a composite crowning shape, and an outer ring crowning parameter CD/LS which is obtained by dividing a crowning amount CD by a raceway length LS of the raceway surface of the outer ring may be 0.02 or higher and 0.3 or lower. In this case, the posture of each tapered roller is less likely to change when the bearing is stopped suddenly, whereby the starting torque can be reduced, and the torque loss, etc., during bearing operation can be reduced. As the crowning amount of the raceway surface of the outer ring is increased, the starting torque gradually increases. If the crowning amount is excessively increased, the posture of each tapered roller is likely to be skewed (changed) at the time of sudden stop, so that the starting torque is increased. Therefore, the outer ring crowning parameter CD/LS is set to 0.3 or lower. The reason for setting the value of the outer ring crowning parameter CD/LS to 0.02 or higher and having a crowning is to reduce the torque loss, etc., during bearing operation.

The raceway surface of the inner ring and rolling surfaces of the tapered rollers may each have a crowning, and the crowning may have a single arc crowning shape or a composite crowning shape. In this case, the torque loss, etc., during bearing operation can be further reduced.

The tapered roller bearing of the present invention may be used in hydraulic equipment. In this case, the torque at the time of bearing start can be stabilized, thereby making it possible to increase the versatility of the hydraulic equipment.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
FIG. 1 is a longitudinal cross-sectional view of a tapered roller bearing according to a first embodiment of the present invention;
FIG. 2 is a partially enlarged longitudinal cross-sectional view of the tapered roller bearing;
FIG. 3 is a longitudinal cross-sectional view of an outer ring of a tapered roller bearing according to a second embodiment of the present invention; and
FIG. 4 is a longitudinal cross-sectional view of a tapered roller bearing according to a third embodiment of the present invention.

### DESCRIPTION OF THE EMBODIMENTS

### [First Embodiment]

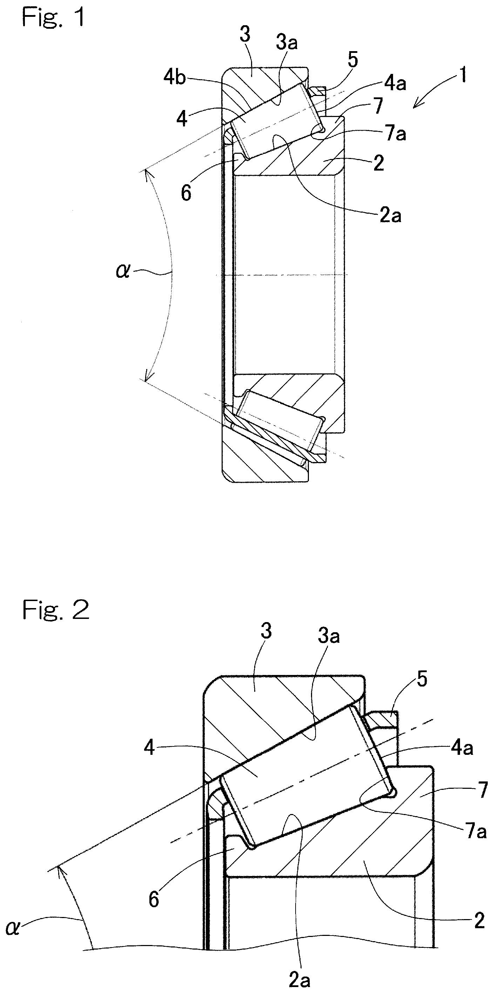

A tapered roller bearing according to a first embodiment of the present invention will be described with reference to FIG. 1 and FIG. 2.

As shown in FIG. 1, this tapered roller bearing 1 includes an inner ring 2 having a conical raceway surface 2a, an outer ring 3 having a conical raceway surface 3a, a plurality of tapered rollers 4 provided between the raceway surface 2a of the inner ring 2 and the raceway surface 3a of the outer ring 3, and a retainer 5 retaining these tapered rollers 4. The inner ring 2 has a small-diameter collar portion 6 formed at a small-diameter end thereof and a large-diameter collar portion 7 formed at a large-diameter end thereof. The large-diameter collar portion 7 has a large collar surface 7a in a surface facing large end surfaces 4a of the tapered rollers 4. Each tapered roller 4 has a conical rolling surface 4b which has a radially outer surface along the raceway surface 3a of the outer ring 3 and the raceway surface 2a of the inner ring 2.

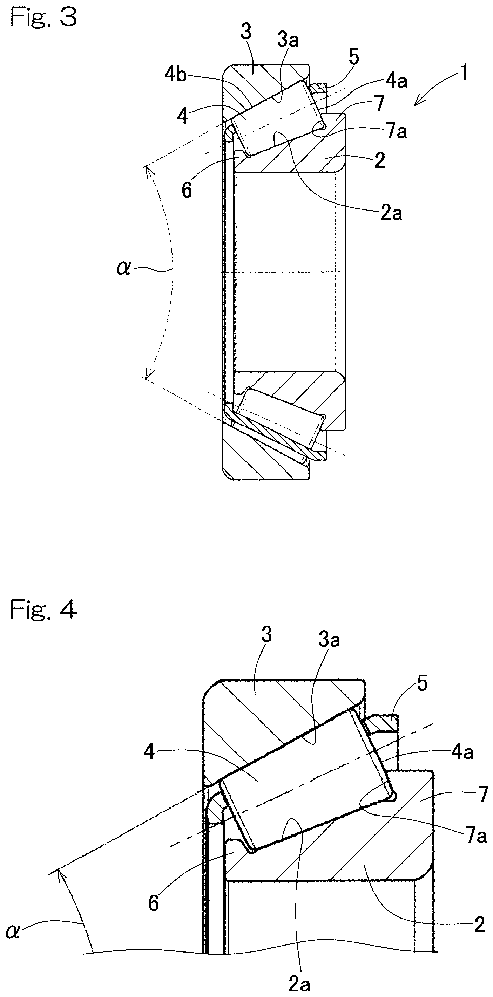

An outer ring angle α which is the cone angle of the raceway surface 3a of the outer ring 3 is 45° or larger and 68° or smaller. The larger the outer ring angle α is, the higher the capacity of the tapered roller bearing 1 to carry axial loads is. In other words, the outer ring angle α of the tapered roller bearing 1 is set as appropriate according to the use conditions of equipment in which the tapered roller bearing 1 is used. Here, as shown in FIG. 3, when the raceway surface 3a of the outer ring 3 has a single arc crowning shape or a composite crowning shape, the outer ring angle α is specified as follows. In a longitudinal cross-section of the outer ring 3, the outer ring angle α is defined as an angle between a straight line L1 connecting one side edge P1 and another side edge P2 in the raceway surface 3a on one side and a straight line L2 connecting one side edge P3 and another side edge P4 in the raceway surface 3a on the other side, which are different in phase by 180 degrees.

As shown in FIG. 2, the large collar surface 7a of the inner ring 2 is, a ground surface composed of a grinding mark as sort of diagonal line. Specifically, the large collar surface 7a of the inner ring 2 has a skewness Rsk of -2 µm or larger and 0 µm or smaller. The skewness Rsk is the skewness Rsk of a roughness curve specified in 4.2.3 of the Japanese Industrial Standard (JIS) B0601: 2013. Since the large collar surface 7a of the inner ring 2 is a ground surface, the large collar surface 7a contributes to improving oil retainability for a lubricant. In addition, since the ground surface has the grinding mark as sort of diagonal line, the lubricant can be spread more widely in the circumferential and radial directions.

Since the skewness Rsk of the large collar surface 7a is -2 µm or larger and 0 µm or smaller, a sufficient oil film is formed on the large collar surface 7a of the inner ring 2 and each roller large end surface 4a, and the torque during bearing operation can be reduced. If the skewness Rsk of the large collar surface 7a is smaller than -2 µm, the oil retainability of the large collar surface 7a of the inner ring 2 is low, and it is difficult for oil to remain on the large collar surface 7a of the inner ring 2 and each roller large end surface 4a. If the skewness Rsk of the large collar surface 7a is larger than 0, the torque during bearing operation increases.

Also, the large collar surface 7a of the inner ring 2 has an arithmetic mean roughness Ra of larger than 0.1 µm and smaller than 0.4 µm and has a maximum height Rz of larger than 1 µm and smaller than 3 µm. In the tapered roller bearing having an outer ring angle α of 45° or larger and 68° or smaller, since the large collar surface 7a of the inner ring 2 is a ground surface, 0.1 µm < arithmetic mean roughness Ra of large collar surface 7a < 0.4 µm, and 1 µm < maximum height Rz of large collar surface 7a < 3 µm, changes in the posture of each tapered roller 4 can be reduced, so that the torque at the time of bearing start can be stabilized. If the arithmetic mean roughness Ra of the large collar surface 7a is 0.1 µm or smaller, the posture of the tapered roller 4 is changed when the bearing is stopped suddenly, so that the restarting torque after the bearing is stopped is increased. If the arithmetic mean roughness Ra of the large collar surface 7a is 0.4 µm or larger, there is a concern that the torque during bearing operation increases and the friction and the wear of the bearing increase, resulting in an excessive temperature rise.

Since the roughness of the large end surface of the tapered roller 4 as well as the large collar surface 7a of the inner ring 2 affects the torque at restart, the friction, the wear, and the temperature rise, the arithmetic mean roughness (roller large end surface roughness) Ra of the large end surface of each tapered roller is set to be larger than 0.04 µm and smaller than 0.2 µm. If the roller large end surface roughness is 0.04 µm or smaller, posture change after the bearing is stopped suddenly is promoted, so that the starting torque is increased. If the roller large end surface roughness is 0.2 µm or larger, there is a concern that the torque during bearing operation increases and the friction and the wear of the bearing increase, resulting in an excessive temperature rise.

For tapered roller bearings of examples according to the first embodiment of the present invention, etc., a torque test simulating sudden stop and restart by repeating start and stop was conducted using a test machine, and the presence or absence of torque change was determined. The test conditions are as follows.
Axial load: 2950 N
Lubrication method: oil bath ISO VG10
Inner ring rotation speed: 30/min
Tested bearing: tapered roller bearing (inner diameter: 60 mm, outer diameter: 125 mm, width: 37 mm, outer ring angle 57°18' (57 degrees 18 minutes))

The starting torque at the time of restart after repeating sudden stop and restart a predetermined number of times was measured by a torque measuring device not shown. The torque value of Example 1 was used as a reference value which is 1, and the torque values of Examples 2 to 5 and a comparative example were converted into relative values with respect to the reference value, that is, multiples of the reference value. In Table 1, when the torque value was substantially equal to the reference value, it was determined that there was no torque change (∘), and when the torque value was 1.7 or more times the reference value, it was determined that there was torque change (×).

**[Table 1]**

| | Ex. 1 | Ex. 2 | Ex. 3 | Ex. 4 | Comp. Ex. | Ex. 5 |
|---|---|---|---|---|---|---|
| Inner ring large collar surface roughness Ra (µm) | 0.27 | 0.19 | 0.16 | 0.1< | 0.01 | 0.32 |
| Roller large end surface roughness Ra (µm) | 0.04< | 0.04< | 0.04< | 0.04< | 0.04 | 0.08 |
| Starting torque | 1 | 1 | 1 | 1 | 1.7-3.0 | 1 |
| Determination | ○ | ○ | ○ | ○ | × | ○ |

According to the test results, in Examples 1 to 5 which satisfy that 0.1 µm < arithmetic mean roughness Ra of large collar surface < 0.4 µm and the roller large end surface roughness Ra is larger than 0.04 µm and smaller than 0.2 µm, restart from a stopped state was repeated a predetermined number of times, but there were no large torque changes in the starting torque at the time of restart and thus there were no problems. In the comparative example in which the inner ring large collar surface roughness is as low as 0.01 µm, when restart from a stopped state was repeated a predetermined number of times, a large torque was required as the starting torque at the time of restart, and the starting torque at the time of restart was not stable but fluctuated between approximately values of 1.7 to 3.0 times, which was a problem. As described above, a correlation was obtained between the inner ring large collar surface roughness, the roller large end surface roughness, and the starting torque.

### <Other Embodiments>

In the following description, parts corresponding to the matters described in the preceding embodiment are designated by the same reference numerals, and the redundant description thereof is omitted. When only a part of a configuration is described, the remaining part of the configuration is the same as that described in the preceding embodiment, unless otherwise specified. The same advantageous effects are achieved by the same configuration. A combination of parts that are specifically described in respective embodiments can be implemented, and, further, embodiments may be partially combined unless such combination causes any problem.

### [Second Embodiment]

As shown in Fig. 3, the entire raceway surface (not including a chamfered portion described later) 3a of the outer ring 3 may have a single arc crowning shape or a composite crowning shape, and an outer ring crowning parameter CD/LS which is obtained by dividing a crowning amount CD by a raceway length LS of the raceway surface 3a of the outer ring 3 may be 0.02 or higher and 0.3 or lower. The raceway length LS does not include a chamfered portion. The other configuration is the same as in the above-described embodiment.

With this configuration, the posture of each tapered roller is less likely to change when the bearing is stopped suddenly, whereby the starting torque can be reduced, and the torque loss, etc., during bearing operation can be reduced. As the crowning amount CD of the raceway surface 3a of the outer ring 3 is increased, the starting torque gradually increases. If the crowning amount CD is excessively increased, the posture of each tapered roller is likely to be skewed (changed) at the time of sudden stop, so that the starting torque is increased. Therefore, the outer ring crowning parameter CD/LS is set to 0.3 or lower. The reason for setting the value of the outer ring crowning parameter CD/LS to 0.02 or higher and having a crowning is to reduce the torque loss, etc., during bearing operation.

### [Third Embodiment]

As shown in Fig. 4, the raceway surface 2a of the inner ring 2 and the rolling surface 4b of each tapered roller 4 may each have a crowning at least at an end portion in the raceway length direction of the inner ring 2, and the crowning may have a single arc crowning shape or a composite crowning shape. In this case, the torque loss, etc., during bearing operation can be further reduced.

The tapered roller bearing 1 according to any of the embodiments may be applied to hydraulic equipment. Examples of the hydraulic equipment to which the tapered roller bearing 1 is applied include, but are not limited to, axial piston pumps used in construction machines and the like. In this hydraulic equipment, the tapered roller bearing 1 according to the embodiment is used as a bearing to which an axial load is dominantly applied.

When the tapered roller bearing 1 according to any of the embodiments is applied to hydraulic equipment, the torque at the time of bearing start can be stabilized, thereby increasing the versatility of the hydraulic equipment. The tapered roller bearings according to the embodiments can also be applied to industrial machines, robots, wind power generation apparatuses, hydraulic power generation apparatuses, machine tools, etc.

Although the present invention has been fully described in connection with the preferred embodiments thereof with reference to the accompanying drawings which are used only for the purpose of illustration, those skilled in the art will readily conceive numerous changes within the scope of the appended claims.

### [Reference Numerals]

- 1: tapered roller bearing
- 2: inner ring
- 2a: raceway surface of inner ring
- 3: outer ring
- 3a: · raceway surface of outer ring
- 4: tapered roller
- 4a: large end surface
- 7a: · large collar surface of inner ring
- α: outer ring angle

## Claims

1. A tapered roller bearing (1) comprising:
an inner ring (2) having a conical raceway surface (2a) and provided with a large collar surface (7a) on a large-diameter side of the raceway surface (2a);
an outer ring (3) having a conical raceway surface (3a); and
tapered rollers (4) provided between the raceway surface (2a) of the inner ring (2) and the raceway surface (3a) of the outer ring (3), wherein
an outer ring angle which is a cone angle of the raceway surface (3a) of the outer ring (3) is 45° or larger and 68° or smaller,
the large collar surface (7a) of the inner ring (2) is a ground surface composed of a grinding mark as sort of diagonal line such that the lubricant can be spread widely in the circumferential and radial directions, and has an arithmetic mean roughness Ra of larger than 0.1 µm and smaller than 0.4 µm and a maximum height Rz of larger than 1 µm and smaller than 3 µm,
the tapered rollers (4) each have a large end surface (4a) having an arithmetic mean roughness Ra of larger than 0.04 µm and smaller than 0.2 µm, and
the large collar surface (7a) of the inner ring (2) has a skewness Rsk of -2 µm or larger and 0 µm or smaller.

2. The tapered roller bearing (1) as claimed in claim 1, wherein
the raceway surface (3a) of the outer ring (3) has a single arc crowning shape or a composite crowning shape, and
an outer ring crowning parameter CD/LS which is obtained by dividing a crowning amount CD by a raceway length LS of the raceway surface (3a) of the outer ring (3) is 0.02 or higher and 0.3 or lower.

3. The tapered roller bearing (1) as claimed in any one of claims 1 or 2, wherein the raceway surface (2a) of the inner ring (2) and rolling surfaces of the tapered rollers (4) each have a crowning, and the crowning has a single arc crowning shape or a composite crowning shape.

4. The tapered roller bearing (1) as claimed in any one of claims 1 to 3, being used in hydraulic equipment.

## Patentansprüche

1. Kegelrollenlager (1), das Folgendes umfasst:
einen Innenring (2), der eine konische Laufringfläche (2a) besitzt und mit einer großen Kragenfläche (7a) auf einer Seite der Laufringfläche (2a) mit großem Durchmesser versehen ist;
einen Außenring (3), der eine konische Laufringfläche (3a) besitzt; und
Kegelrollen (4), die zwischen der Laufringfläche (2a) des Innenrings (2) und der Laufringfläche (3a) des Außenrings (3) vorgesehen sind, wobei
ein Außenringwinkel, der einen Konuswinkel der Laufringfläche (3a) des Außenrings (3) darstellt, 45° oder größer und 68° oder kleiner ist,
die große Kragenfläche (7a) des Innenrings (2) eine geschliffene Fläche ist, die aus einer Schleifspur als eine Art diagonaler Linie besteht, sodass sich das Schmiermittel in Umfangsrichtung und in radialer Richtung weit verteilen kann, und ein arithmetisches Mittel der Rauigkeit Ra von größer als 0,1 µm und kleiner als 0,4 µm und eine maximale Höhe Rz von größer als 1 µm und kleiner als 3 µm besitzt,
die Kegelrollen (4) jeweils eine große Stirnfläche (4a) mit einem arithmetischen Mittel der Rauigkeit Ra von größer als 0,04 µm und kleiner als 0,2 µm besitzen, und
die große Kragenfläche (7a) des Innenrings (2) eine Schiefe Rsk von -2 µm oder größer und 0 µm oder kleiner besitzt.

2. Kegelrollenlager (1) nach Anspruch 1, wobei
die Laufringfläche (3a) des Außenrings (3) eine einbogige Balligkeitsform oder eine zusammengesetzte Balligkeitsform besitzt, und
ein Balligkeits-Parameter des Außenrings CD/LS, den man erhält durch Dividieren eines Balligkeitsbetrags CD durch eine Laufringlänge LS der Laufringfläche (3a) des Außenrings (3), 0,02 oder mehr und 0,3 oder weniger beträgt.

3. Kegelrollenlager (1) nach einem der Ansprüche 1 oder 2, wobei die Laufringfläche (2a) des Innenrings (2) und die Wälzflächen der Kegelrollen (4) jeweils eine Balligkeit aufweisen, wobei die Balligkeit eine einbogige oder eine zusammengesetzte Balligkeitsform besitzt.

4. Kegelrollenlager (1) nach einem der Ansprüche 1 bis 3, das in Hydraulikanlagen verwendet wird.

## Revendications

1. Roulement à rouleaux coniques (1) comprenant :
une bague intérieure (2) ayant une surface de chemin de roulement conique (2a) et pourvue d'une grande surface de collet (7a) sur un côté de grand diamètre de la surface de chemin de roulement (2a) ;
une bague extérieure (3) ayant une surface de chemin de roulement conique (3a) ; et
des rouleaux coniques (4) prévus entre la surface de chemin de roulement (2a) de la bague intérieur (2) et la surface de chemin de roulement (3a) de la bague extérieur (3), dans lesquels
un angle de bague extérieure, qui est un angle de cône de la surface de chemin de roulement (3a) de la bague extérieure (3), est supérieur ou égal à 45° et inférieur ou égal à 68°,
la grande surface de collet (7a) de la bague intérieure (2) est une surface meulée composée d'une marque de meulage comme une sorte de ligne diagonale, de sorte que le lubrifiant peut être largement répandu dans les directions circonférentielle et radiale, et présente une rugosité moyenne arithmétique Ra supérieure à 0,1 µm et inférieure à 0,4 µm et une hauteur maximale Rz supérieure à 1 µm et inférieure à 3 µm,
les rouleaux coniques (4) ont chacun une grande surface d'extrémité (4a) ayant une rugosité moyenne arithmétique Ra supérieure à 0,04 µm et inférieure à 0,2 µm, et
la grande surface de collet (7a) de la bague intérieur (2) présente une asymétrie Rsk égale ou supérieure à -2 µm et égale ou inférieure à 0 µm.

2. Roulement à rouleaux coniques (1) selon la revendication 1, dans lequel
la surface de chemin de roulement (3a) de la bague extérieure (3) présente une forme de bombage en arc unique ou une forme de bombage composite, et
un paramètre de bombage de la bague extérieure CD/LS, qui est obtenu en divisant la quantité de bombage CD par la longueur du chemin de roulement LS de la surface de chemin de roulement (3a) de la bague extérieure (3), est supérieur ou égal à 0,02 et inférieur ou égal à 0,3.

3. Roulement à rouleaux coniques (1) selon l'une quelconque des revendications 1 ou 2, dans lequel la surface de chemin de roulement (2a) de la bague intérieure (2) et les surfaces de roulement des rouleaux coniques (4) présentent chacune un bombage, et le bombage présente une forme de bombage en arc unique ou une forme de bombage composite.

4. Roulement à rouleaux coniques (1) selon l'une quelconque des revendications 1 à 3, utilisé dans un équipement hydraulique.
